# EUROPÄISCHE PATENTANMELDUNG

(11) **EP 1 475 282 A1**
(43) Veröffentlichungstag der Anmeldung: **10.11.2004**
(21) Anmeldenummer: 03010513.4
(22) Anmeldetag: 09.05.2003
(51) Int. Cl.: B60R 22/46

(54) **Sicherheitseinrichtung und Verfahren zur Gurtkraftbegrenzung mit einer solchen Einrichtung**

(71) Anmelder: Delphi Technologies, Inc., Troy, MI 48007 (US)
(72) Erfinder: Maierhofer, Gunter, 10249 Berlin (DE)
(74) Vertreter: Manitz, Finsterwald & Partner GbR

(57) **Zusammenfassung**

Eine Sicherheitseinrichtung weist einen Gurtaufroller (10) und eine Steuereinheit (50) auf, wobei der Gurtaufroller (10) mit einem Grundrahmen (12), einer von einem Elektromotor (22) angetriebenen Spindel (14) und einem Gurtkraftbegrenzerelement (24) versehen ist. Die Steuereinheit (50) dient zur Ansteuerung des Elektromotors (22) und des Gurtkraftbegrenzerelementes (24), um ein Niveau der Gurtkraftbegrenzung zu variieren.

## Beschreibung

Die vorliegende Erfindung betrifft eine Sicherheitseinrichtung mit einem Gurtaufroller und einer Steuereinheit. Der Gurtaufroller besitzt einen Grundrahmen und weist eine von einem Elektromotor angetriebene Spindel mit einem Gurtband sowie ein Gurtkraftbegrenzerelement auf, das mittels einer Auslöseeinrichtung aktivierbar ist. Zur Ansteuerung des Elektromotors ist die Steuereinheit vorgesehen, die den Elektromotor in Abhängigkeit von Sensorsignalen ansteuert und auch zur Ansteuerung der Auslöseeinrichtung dient.

Derartige Sicherheitseinrichtungen sind grundsätzlich bekannt. Hierbei dient der Elektromotor als Gurtstraffer, um den Sicherheitsgurt im Falle eines Unfalls in kürzester Zeit zu straffen.

Das Gurtkraftbegrenzerelement dient dazu, im Falle eines Unfalls die vom Sicherheitsgurt auf den Fahrzeuginsassen ausgeübte Gurtkraft zu begrenzen. Diese Gurtkraftbegrenzung wird dadurch erreicht, dass beispielsweise ein Verdrängungs- oder Verformungselement zwischen die Spindel und den Grundrahmen geschaltet wird, so dass oberhalb einer bestimmten Gurtkraft in dem Gurtkraftbegrenzerelement Arbeit geleistet wird, wodurch die auf den Fahrzeuginsassen wirkende Gurtkraft auf ein bestimmtes Niveau begrenzt wird. Hierbei ist es jedoch grundsätzlich wünschenswert, nicht nur ein von dem Gurtkraftbegrenzerelement vorgegebenes Kraftniveau zur Verfügung zu haben, beispielsweise um Größe, Gewicht und Position des Fahrzeuginsassen sowie Schwere und Verlauf des Unfalls zu berücksichtigen. Im Stand der Technik wurde hierzu bereits vorgeschlagen, mehrere Gurtkraftbegrenzerelemente vorzusehen und diese wechselweise zuzuschalten. Eine solche Lösung ist jedoch aufwendig und damit kostenintensiv.

Es ist die Aufgabe der vorliegenden Erfindung, eine Sicherheitseinrichtung der eingangs genannten Art zu schaffen, die auf einfache und damit kostengünstige Weise bei kompakter Bauweise sowohl eine Gurtstraffung wie auch eine variable Gurtkraftbegrenzung ermöglicht.

Die Lösung dieser Aufgabe erfolgt durch die Merkmale des Anspruchs 1 und insbesondere dadurch, dass die Steuereinheit derart ausgebildet ist, dass in Abhängigkeit von Sensorsignalen bei aktivierter Auslöseeinrichtung, d.h. bei aktiviertem Gurtkraftbegrenzerelement, auch der Elektromotor aktiviert wird, um die Spindel in oder entgegen der Gurtabzugsrichtung anzutreiben und dadurch ein durch das Gurtkraftbegrenzerelement vorgegebenes Kraftniveau zu variieren.

Erfindungsgemäß wird der Elektromotor nicht nur zur Gurtstraffung sondern auch zur Variation des durch das Gurtkraftbegrenzerelement vorgegebenen Kraftniveaus eingesetzt. Im Falle eines Unfalls wird der Steuereinheit durch einen Crashsensor signalisiert, dass ein Unfall vorliegt, woraufhin der Elektromotor aktiviert wird um den Gurt zu straffen. Nach Straffung des Gurtes wird die Auslöseeinrichtung von der Steuereinheit aktiviert, so dass das Gurtkraftbegrenzerelement wirksam wird, wenn der Fahrzeuginsasse von dem Sicherheitsgurt zurückgehalten wird. Hierbei übt der Fahrzuginsasse aufgrund des Unfalls auf den durch die Auslöseeinrichtung blockierten Sicherheitsgurt eine Auszugskraft auf diesen aus, die zunächst kontinuierlich ansteigt. Übersteigt diese Auszugskraft das von dem Gurtkraftbegrenzerelement vorgegebene Kraftniveau, so wird in dem Gurtkraftbegrenzerelement Arbeit verrichtet, beispielsweise durch Verdrehen eines Torsionsstabes oder Verdrängen einer Flüssigkeit, woraufhin die vom Sicherheitsgurt auf den Fahrzeuginsassen ausgeübte Haltekraft nicht weiter ansteigt.

Das Drehmoment des Elektromotors lässt sich bei Kenntnis der Spannung und Drehzahl des Elektromotors anhand der drehzahlabhängigen Drehmomentkennlinie des Elektromotors ermitteln. Die Drehzahl ist beispielsweise durch einen Hall-Sensor messbar. Durch entsprechendes Ansteuern des Elektromotors, z.B. durch eine Variation der Motorspannung oder durch eine pulsweitenmodulierte Ansteuerung des Elektromotors, ist es möglich, das Drehmoment des Elektromotors und somit das Kraftniveau zu variieren. Wird der Elektromotor in Gurtauszugsrichtung angesteuert, so kann das Kraftniveau abgesenkt werden. Wird der Elektromotor entgegen der Gurtauszugsrichtung angesteuert, so kann dieses Kraftniveau angehoben werden. Bei entsprechender Ansteuerung des Elektromotors kann das Kraftniveau grundsätzlich auch konstant gehalten oder wie gewünscht variiert werden.

Hierdurch ist es erfindungsgemäß möglich, die vom Sicherheitsgurt auf den Fahrzeuginsassen ausgeübte Kraft nicht nur stufenweise, sondern innerhalb gewisser Bereiche sogar stufenlos zu variieren. Durch Sensorsignale, die beispielsweise das Gewicht, die Größe und die jeweilige Sitzposition des Fahrzeuginsassen erfassen sowie durch Sensoren, die den Verlauf des Unfalls, beispielsweise durch Beschleunigungsmessung und Positionsmessung des Fahrzeuges, ermitteln, lässt sich somit eine an den Verlauf des Unfalls und auf den Fahrzeuginsassen abgestimmte Kraftkurve einstellen, um die auf den Fahrzeuginsassen durch den Sicherheitsgurt ausgeübte Kraft zu optimieren.

Die Erfindung eignet sich auch zum Nachrüsten von Gurtaufrollern, die mit einem Elektromotor und einem Gurtkraftbegrenzer versehen sind.

Vorteilhafte Ausführungsformen der Erfindung sind in der Beschreibung, der Zeichnung sowie den Unteransprüchen beschrieben.

Nach einer ersten vorteilhaften Ausführungsform weist das Gurtkraftbegrenzerelement einen mit dem Grundrahmen koppelbaren oder gekoppelten Abschnitt und einen mit der Spindel gekoppelten oder koppelbaren Abschnitt auf, wobei letzterer Abschnitt ohne Zwischenschaltung einer Kupplung mit dem Elektromotor gekoppelt ist. Erfindungsgemäß kann somit ein Abschnitt des Gurtkraftbegrenzerelementes unmittelbar, d.h. ohne Zwischenschaltung einer Kupplung, mit dem Elektromotor verbunden werden, wodurch sich ein sehr einfacher Aufbau der Sicherheitseinrichtung ergibt.

Nach einer weiteren vorteilhaften Ausführungsform ist das Gurtkraftbegrenzerelement ein Torsionsstab, dessen eines Ende drehfest mit der Spindel verbunden ist und dessen anderes Ende mit Hilfe der Auslöseeinrichtung mit dem Grundrahmen drehfest koppelbar ist. Bei dieser Ausführungsform kann der Torsionsstab durch die Auslöseeinrichtung mit dem Grundrahmen gekoppelt werden, so dass das andere Ende gegenüber dem einen Ende verdreht werden kann, wenn der Gurt in Gurtabzugsrichtung bewegt wird. Gleichzeitig kann das mit der Spindel verbundene Ende des Torsionsstabes von dem Elektromotor in oder entgegen der Gurtabzugsrichtung angetrieben werden, um das Niveau der Kraftbegrenzung zu variieren.

Nach einem weiteren Aspekt der Erfindung betrifft diese ein Verfahren zur Gurtkraftbegrenzung unter Verwendung eines Gurtaufrollers, der einen Grundrahmen, eine von einem Elektromotor angetriebene Spindel und ein aktivierbares Gurtkraftbegrenzerelement aufweist, wobei im Falle eines Unfalls sowohl das Gurtkraftbegrenzerelement wie auch der Elektromotor aktiviert werden, um ein durch das Gurtkraftbegrenzerelement vorgegebenes Kraftniveau zu variieren.

Durch ein solches Verfahren ergeben sich die eingangs genannten Vorteile.

Nach einer besonders vorteilhaften Ausführungsform des erfindungsgemäßen Verfahrens kann die Drehrichtung des Elektromotors während der Gurtkraftbegrenzung umgedreht werden. Hierdurch kann das von dem Gurtkraftbegrenzerelement vorgegebene Kraftniveau beispielsweise zunächst im frühen Stadium eines Unfalls über das von dem Gurtkraftbegrenzerelement vorgegebene Niveau erhöht, anschließend auf dieses Niveau abgesenkt und schließlich noch weiter unterhalb dieses Niveaus abgesenkt werden, wodurch die auf den Fahrzeuginsassen wirkende Gurtkraft optimal an den Fahrzeuginsassen, dessen Position innerhalb des Fahrzeugs sowie dem Unfallverlauf angepasst werden kann.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine perspektivische Ansicht einer Sicherheitseinrichtung;
- Fig. 2: eine Seitenansicht der Sicherheitseinrichtung von Fig. 1;
- Fig. 3: einen Schnitt entlang der Linie A-A in Fig. 2; und
- Fig. 4: einen mit der erfindungsgemäßen Sicherheitseinrichtung erzielbaren Gurtkraftverlauf.

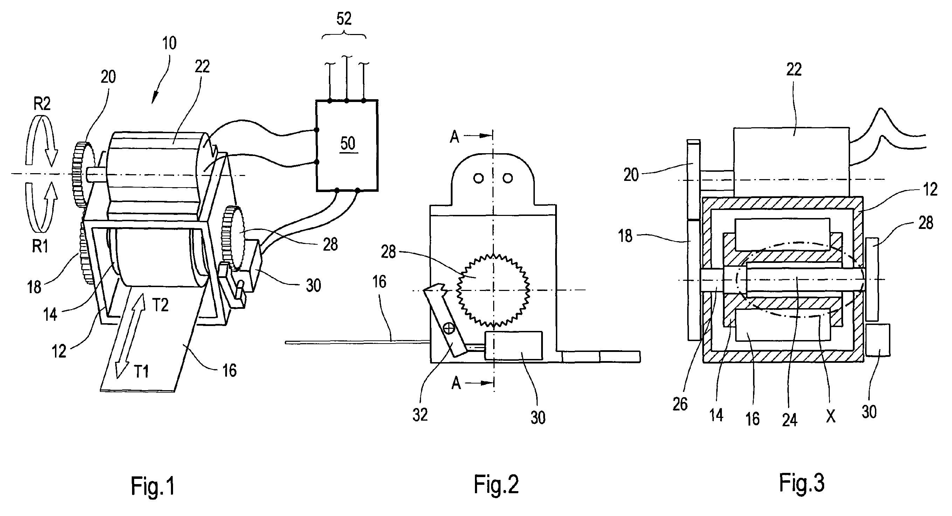

Fig. 1 zeigt eine Sicherheitseinrichtung gemäß der Erfindung mit einem Gurtaufroller 10 und einer Steuereinheit 50, wobei der Gurtaufroller 10 einen Grundrahmen 12 aufweist, auf dem eine Spindel 14 drehbar gelagert ist, auf der ein Gurtband 16 aufgewickelt ist. Die Spindel 14 ist über zwei miteinander kämmende Zahnräder 18, 20 mit der Welle eines Elektromotors 22 verbunden. Gemäß einer hier nicht dargestellten Ausführungsform des Gurtaufrollers 10 kann die Spindel 14 zusätzlich oder alternativ zu den Zahnrädern 18, 20 auch über ein, insbesondere fast selbsthemmendes, Getriebe mit der Welle des Elektromotors 22 gekoppelt sein.

Durch entsprechendes Ansteuern des Elektromotors kann dieser in Richtung R1 oder R2 in Drehung versetzt werden, wodurch das Gurtband 16 in Richtung T1, d.h. in Gurtabzugsrichtung, oder in Richtung T2, d.h. in Gurtaufwickelrichtung, bewegt werden kann.

Der Elektromotor 22 ist mit der Steuereinheit 50 verbunden, die in Abhängigkeit von Sensorsignalen, die mit dem Bezugszeichen 52 angedeutet sind, eine Ansteuerung des Elektromotors 22 vornimmt.

Wie insbesondere Fig. 3 zeigt, ist die Spindel 14 mit einem Gurtkraftbegrenzerelement in Form eines Torsionsstabes 24 versehen, der gleichzeitig als Welle der Spindel dient. Der Torsionsstab 24 ist an seinem in Fig. 3 linken Ende drehfest mit der Spindel 14 verbunden, wobei in Verlängerung dieser Verbindung ein Wellenzapfen 26 vorgesehen ist, auf dem das Zahnrad 18 befestigt ist.

An seinem in Fig. 3 rechten Ende ist der Torsionsstab 24 frei drehbar in dem Grundrahmen 12 gelagert und der Torsionsstab 24 steht aus dem Grundrahmen 12 etwas vor, wobei an dem vorstehenden Ende ein weiteres Zahnrad 28 befestigt ist. Zwischen dem linken und dem rechten Ende des Torsionsstabes 24 befindet sich ein Torsionsabschnitt, der mit dem Bezugszeichen X angedeutet ist.

Im Bereich des weiteren Zahnrads 28 ist eine Auslöseeinrichtung 30 vorgesehen, die beispielsweise über Zünden eines pyrotechnischen Zündsatzes eine Sperrklinke 32 aktiviert, die eine Drehung des Zahnrades 28 hemmt.

Ferner kann die Sicherheitseinrichtung eine weitere (nicht dargestellte) Einrichtung aufweisen, die ein Drehen der Spindel in Abhängigkeit von Fahrzeugneigung oder Beschleunigung blockiert und wieder freigibt, um die übliche Automatik-Gurt-Funktion sicherzustellen.

Bei der in den Fig. 1 bis 3 dargestellten Sicherheitseinrichtung wird im normalen Fahrbetrieb der Elektromotor 22 von der Steuereinheit 50 so angesteuert, dass eine möglichst geringe Gurtkraft auf den Fahrzeuginsassen ausgeübt wird, wobei dennoch der Gurt stets am Fahrzeuginsassen anliegen soll. Durch Erfassen des Gurtauszugs mittels eines Sensors und entsprechendes Ansteuern des Elektromotors 22 kann hierdurch der Komfort für den Fahrzeuginsassen optimiert werden. Wenn ein Blockieren des Sicherheitsgurtes erforderlich ist, kann dies entweder durch Ansteuern des Motors 22 und/oder durch eine zusätzliche Blockiereinrichtung erfolgen.

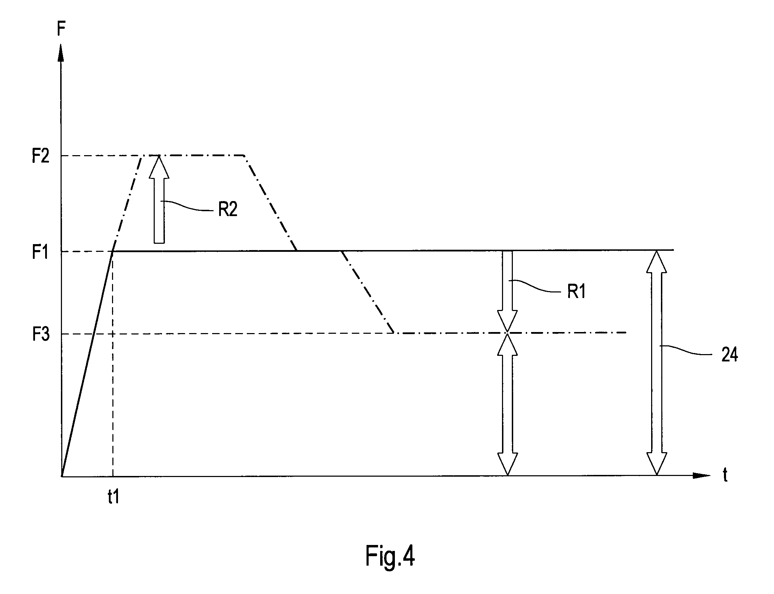

Wenn ein am Fahrzeug vorgesehener Crashsensor der Steuereinheit 50 signalisiert, dass ein Unfall vorliegt, wird zunächst der Elektromotor 22 in Richtung R2 angetrieben, so dass der Gurt gestrafft wird, um etwaige Gurtlose zu beseitigen. Anschließend wird von der Steuereinheit 50 die Auslöseeinrichtung 30 aktiviert, so dass die Sperrklinke 32 in das Zahnrad 28 eingreift und eine weitere Drehung der Spindel zunächst verhindert. Übersteigt die vom Fahrzeuginsassen auf den Gurt ausgeübte Gurtkraft einen vorbestimmten Wert, so beginnt sich die Spindel 14 jedoch zu drehen, da der Torsionsstab 24 im Torsionsabschnitt X tordiert wird, wodurch die auf den Fahrzeuginsassen ausgeübte Gurtkraft auf einem im Wesentlichen konstanten Niveau F1 gehalten werden kann. Eine solche Situation ist in Fig. 4 mit einer durchgezogenen Linie dargestellt, wobei hier die Gurtkraft gegenüber der Zeit aufgetragen ist.

Wie in Fig. 4 zu erkennen ist, steigt die Gurtkraft nach Aktivieren der Auslöseeinrichtung 30 zunächst relativ steil an, bis zum Zeitpunkt t1 das Gurtkraftbegrenzerelement aktiv wird, d.h. sich der Torsionsstab 24 verdreht. Anschließend bleibt die Gurtkraft auf einem relativ konstanten Niveau.

Durch entsprechendes Ansteuern des Elektromotors 22 mit Hilfe der Steuereinheit 50 ist es erfindungsgemäß möglich, dieses Kraftniveau F1 auf ein Kraftniveau F2, beispielsweise etwa 1,5 kN, anzuheben oder auf ein Kraftniveau F3, beispielsweise etwa 1 kN, abzusenken. Durch Ansteuern des Elektromotors in Richtung R2 wird das Gurtband durch den Elektromotor in Richtung T2 auf die Spindel 14 aufgewickelt, wodurch die auf den Fahrzeuginsassen wirkende Gurtkraft ansteigt. Durch Ansteuern des Elektromotors 22 in Richtung R1 wird Gurtband 16 von der Spindel 14 abgewickelt, wodurch sich die auf den Fahrzeuginsassen wirkende Gurtkraft verringert. Hierdurch kann die Gurtkraft von dem Niveau F1 oder F2 auf ein Niveau F3 abgesenkt werden.

An dieser Stelle sei bemerkt, dass die in Fig. 4 dargestellte Situation lediglich rein beispielhaft ist und eine beliebige Variation des Gurtkraftverlaufs durch entsprechendes Ansteuern des Elektromotors 22 mit Hilfe der Steuereinheit 50 möglich ist. Auch sei darauf hingewiesen, dass der Gurtkraftverlauf in Abhängigkeit von den Werten der Sensoren 52, d.h. beispielsweise Größe, Gewicht und Position des Fahrzeuginsassen sowie zeitlicher Verlauf des Unfalls, Beschleunigung und Lage des Fahrzeugs optimal angepasst werden kann.

### Bezugszeichenliste

- 10: Sicherheitseinrichtung
- 12: Grundrahmen
- 14: Spindel
- 16: Gurtband
- 18, 20: Zahnrad
- 22: Elektromotor
- 24: Torsionsstab
- 26: Wellenzapfen
- 28: Zahnrad
- 30: Auslöseeinrichtung
- 32: Sperrklinke
- 50: Steuereinheit
- 52: Sensoranschlüsse

- F1, F2, F3: Kraftniveaus
- R1, R2: Drehrichtungen
- T1: Gurtabzugsrichtung
- T2: Gurtaufwickelrichtung
- X: Torsionsabschnitt

## Patentansprüche

1. Sicherheitseinrichtung, umfassend
einen Gurtaufroller (10) mit einem Grundrahmen (12), einer von einem Elektromotor (22) angetriebenen Spindel (14), auf die ein Gurtband (16) aufgewickelt ist, und einem Gurtkraftbegrenzerelement (24), das mittels einer Auslöseeinrichtung (30) aktivierbar ist, und
eine Steuereinheit (50) zur Ansteuerung des Elektromotors (22) und der Auslöseeinrichtung (30) in Abhängigkeit von Sensorsignalen (52),
**dadurch gekennzeichnet, dass**
die Steuereinheit (50) derart ausgebildet ist, dass in Abhängigkeit von Sensorsignalen (52) bei aktivierter Auslöseinrichtung (30) der Elektromotor (22) aktiviert wird, um die Spindel (14) in oder entgegen der Gurtabzugsrichtung (T1) anzutreiben und dadurch ein durch das Gurtkraftbegrenzerelement (24) vorgegebenes Kraftniveau zu variieren.

2. Sicherheitseinrichtung nach Anspruch 1,
**dadurch gekennzeichnet, dass**
das Gurtkraftbegrenzerelement (24) einen mit dem Grundrahmen (12) koppelbaren oder gekoppelten Abschnitt und einen mit der Spindel (14) gekoppelten oder koppelbaren Abschnitt aufweist, wobei letzterer Abschnitt ohne Zwischenschaltung einer Kupplung mit dem Elektromotor (22) gekoppelt ist.

3. Sicherheitseinrichtung nach Anspruch 1,
**dadurch gekennzeichnet, dass**
das Gurtkraftbegrenzerelement ein Torsionsstab (24) ist, dessen eines Ende drehfest mit der Spindel (14) verbunden ist und dessen anderes Ende mit Hilfe der Auslöseeinrichtung (30) mit dem Grundrahmen (12) drehfest koppelbar ist.

4. Verfahren zur Gurtkraftbegrenzung unter Verwendung eines Gurtaufrollers der einen Grundrahmen, eine von einem Elektromotor angetriebene Spindel und ein aktivierbares Gurtkraftbegrenzerelement aufweist, wobei im Falle eines Unfalls sowohl das Gurtkraftbegrenzerelement wie auch der Elektromotor aktiviert werden, um ein durch das Gurtkraftbegrenzerelement vorgegebenes Kraftniveau zu variieren.

5. Verfahren nach Anspruch 4,
**dadurch gekennzeichnet, dass**
die Aktivierung des Elektromotors in Abhängigkeit von Sensorsignalen erfolgt die zumindest einen Parameter erfassen, der aus der Gruppe ausgewählt ist, die umfasst: Beschleunigung des Fahrzeugs, Gewicht des Fahrzeuginsassen, Größe des Fahrzeuginsassen, Position des Fahrzeuginsassen, Zeit nach Aktivierung des Gurtkraftbegrenzerelementes.

6. Verfahren nach Anspruch 4,
**dadurch gekennzeichnet, dass**
die Drehrichtung des Elektromotors während der Gurtkraftbegrenzung umgedreht wird.
